# FASCICULE DE BREVET EUROPEEN

(11) **EP 1 173 526 B1**
(45) Date de publication et mention de la délivrance du brevet: **25.11.2009**
(21) Numéro de dépôt: 00914245.6
(22) Date de dépôt: 23.03.2000
(51) Int. Cl.: C09K 21/14, C03C 25/26, C03C 25/28, D06M 15/263, D06M 11/72, C09D 5/18

(54) **PROCEDE D'OBTENTION D'UN FIL, FIL OBTENU PAR LE PROCEDE ET STRUCTURE TEXTILE**
FLAMMHEMMENDE KUNSTSTOFFZUSAMMENSETZUNG, GARN UND MIT ZUSAMMENSETZUNG BESCHICHTETE TEXTILSTRUKTUR
FLAME RETARDANT PLASTIC COMPOSITION, YARN AND TEXTILE STRUCTURE COATED THEREWITH

(30) Priorité: 23.03.1999 FR 9903764; 30.03.1999 FR 9904202
(43) Date de publication de la demande: 23.01.2002
(73) Titulaire: Chavanoz Industrie, 38230 Chavanoz (FR)
(72) Inventeur: CONESA, Isabelle, F-38460 St Romain de Jalionas (FR); DAMOUR, François-Xavier, F-69004 Lyon (FR)
(74) Mandataire: Schouller, Jean-Philippe
(86) Numéro de dépôt international: PCT/FR2000/000738
(87) Numéro de publication internationale: WO 2000/056839

(56) Documents cités:
- DE-A- 3 444 163
- FR-A- 2 755 973
- GB-A- 2 079 801
- US-A- 3 926 894
- US-A- 4 801 493
- DATABASE WPI Section Ch, Week 199821 Derwent Publications Ltd., London, GB; Class A14, AN 1998-238259 XP002124179 & RU 2 091 424 C (STEEL RES INST STOCK CO) , 27 septembre 1997 (1997-09-27)
- DATABASE WPI Section Ch, Week 199026 Derwent Publications Ltd., London, GB; Class A18, AN 1990-196094 XP002124180 & JP 02 127446 A (FUJIKURA RUBBER WORKS LTD), 16 mai 1990 (1990-05-16)

## Description

Procédé d'obtention d'un fil, obtenue pour le procedé , fil et structure textile

La présente invention concerne un procédé d'enduction d'une composition ignifugeante, sans halogène, d'un substrat, par exemple des fils ou structures textiles, pour répondre à toutes applications ou spécifications particulières, par exemple pour la fabrication d'écrans solaires tels que stores ou rideaux. Plus précisément, l'invention concerne ledit procédé d'enduction avec une composition ignifugeante, à l'état de plastisol, comprenant un milieu plastifiant, au moins une résine acrylique dispersée dans ledit milieu plastifiant, et un agent intumescent.

De manière générale, on connaît déjà, et la Demanderesse fabrique et vend des fils composites comprenant :
- une âme comportant un fil continu, notamment en matériau inorganique, par exemple en verre, et
- une gaine ou enveloppe comportant une matrice constituée par au moins un matériau polymère chloré, par exemple un polychlorure de vinyle (PVC),
- une charge minérale ignifugeante incorporée et distribuée dans ladite matrice,
- et un plastifiant.

Préférentiellement, mais de manière non exclusive, un tel fil est obtenu par enduction de l'âme avec un plastisol comprenant le matériau polymère chloré, par exemple PVC, et le plastifiant, puis par gélification du Plastisol autour de l'âme.

D'autre part, la Demanderesse a proposé une composition plastique ignifugeante sans halogène, décrite dans la document FR-A-2 755 973, applicable à un substrat, tel qu'un fil en matière minérale ou organique, d'origine naturelle ou synthétique, telle qu'en verre, polyester, polyamide, polypropylène, polyéthylène, et sans halogène ou composé halogéné. Cette composition plastique ignifugeante comprend une fraction liante liant ladite composition, et un agent intumescent constitué au moins par un composé acide fort, thermodégradable, et un composé polyhydrique carboné. Ladite fraction liante en tant que telle a un indice limite d'oxygène (ILO) au moins égal à 25 %, et l'agent intumescent est constitué essentiellement par ledit composé acide fort et ledit composé polyhydrique carboné, l'extrait sec de la composition présentant un rapport pondéral entre ledit composé acide fort et ledit composé polyhydrique carboné compris entre 1,5 et 2, et de préférence de 1,85.

La composition ignifugeante décrite peut se présenter sous forme solide, fondue ou liquide. De manière préférentielle, cette composition se présente sous forme d'une dispersion aqueuse.

Les tissus techniques obtenus avec des fils tels que décrits ci-dessus, et lorsqu'ils sont mis en oeuvre dans différents environnements, notamment pour l'aménagement tant intérieur qu'extérieur d'immeubles ou constructions, par exemple à titre de stores, sont soumis à des exigences de comportement au feu, définies par des réglementations et/ou procédures d'homologation ou autorisation, nationales ou internationales.

Ainsi, la réglementation applicable à de tels tissus en République Fédérale d'Allemagne définit différents classements, caractérisés notamment par la longueur de l'échantillon détruite par le feu, et par la température des fumées de combustion, et identifiés par les lettres B1 à B3, la lettre B1 caractérisant le meilleur comportement au feu accessible par un matériau comprenant des matières organiques.

La réglementation applicable en France définit quant à elle, également différents classements, d'une part caractérisés notamment par l'émission de fumées et identifiés par les lettres F0 à F5, F3 étant le meilleur comportement accessible par un matériau contenant un polymère halogéné, et d'autre part caractérisés notamment par la durée d'inflammation du tissu, et identifiés par les lettres M0 à M4, la lettre M1 identifiant le meilleur comportement au feu généralement accessible par un matériau comprenant des matières organiques.

Aux fins de satisfaire aux exigences en matière de comportement au feu, il est connu d'incorporer dans toute composition plastique un agent intumescent approprié, formulé avec la résine de manière à atteindre le niveau d'ignifugation requis.

S'agissant de l'enduction d'un substrat, et en particulier de l'âme d'un fil, avec une composition plastique ignifugeante, comprenant une résine acrylique et un agent intumescent, la Demanderesse a recherché le mode d'enduction le plus approprié, c'est-à-dire susceptible de préserver en final les propriétés du fil ou de la structure composite obtenue, en termes de thermo-soudabilité et de résistance aux basses comme aux températures élevées.

Et s'agissant d'un fil, la Demanderesse a d'abord retenu à cette fin un mode d'enduction, par passage de l'âme dans une filière, avec une distribution périphérique autour de l'âme d'une gaine de la composition plastique ignifugeante, à l'état de plastisol non gélifié, c'est-à-dire avec un milieu plastifiant dans lequel sont distribués, et la résine acrylique et l'agent Intumescent,

Cette voie d'apport de la composition plastique ignifugeante sur le substrat, c'est-à-dire à l'état de plastisol, évite de recourir à une fusion de la résine, à température élevée, susceptible de dégrader les propriétés finales de cette dernière et de dégrader l'agent intumescent.

Ensuite, la Demanderesse a recherché les propriétés rhéologiques optimales, des compositions ignifugeantes selon l'invention, compatibles avec les procédés d'enduction mettant en oeuvre des filières à taux de cisaillement élevé (par exemple de l'ordre d'au moins 15.000 à 20.000, voire 100.000 s⁻¹).

Selon l'invention, cette compatibilité est obtenue lorsque le plastisol présente, à bas taux de cisaillement, inférieur à 400s, un comportement de type newtonien, avec une viscosité inférieure ou égale à 6000 mPa.s., mesurée avec un viscosimètre Brookfield RVT à 20 tours/min. et à taux de cisaillement élevé, supérieur à 10.000 s⁻¹, un comportement de type pseudo-plastique.

Comme l'homme du métier en rhéologie le sait, un comportement newtonien est caractérisé par une contrainte de cisaillement qui varie linéairement avec le taux de cisaillement, et un comportement pseudo-plestique est caractérisé par une contrainte de cisaillement qui atteint une valeur limite, lorsque le taux de cisaillement augmente.

Dans le cas de la présente invention, le comportement newtonien est mis en évidence par la possibilité de mesurer la viscosité de la composition ignifugeante, selon toute méthode appropriée, standardisée ou non, et le comportement pseudo-plastique est mis en évidence par l'aptitude pour la composition ignifugeante de passer, sans couture, dans une filière d'enduction avec un fort taux de cisaillement, par exempte de l'ordre de 15.000 à 20.000 s-1.

Préférentiellement, de manière à préserver les propriétés du fil de structure composite obtenu, notamment sa thermo-soudabilité et sa résistance aux intempéries, la proportion pondérale du milieu plastifiant comprenant un phosphate est au plus égale à 200 % par rapport au poids de la résine acrylique, et/ou la proportion pondérale de l'agent intumescent est au plus égale à 200 % par rapport au poids de résine acrylique.

Le milieu plastifiant comporte majoritairement en poids un phosphate organique, avec éventuellement et préférentiellement un phtalate.

La proportion pondérale de l'agent intumescent est comprise entre 50 et 200 %, et de préférence entre 150 et 200 % en poids de la résine.

Tout fil composite ou toute structure composite textile, susceptible d'être obtenue par enduction puis gélification d'une composition ignifugeante telle que définie précédemment, peut permettre d'atteindre une résistance au feu selon la norme française NFP 92503, notamment le niveau de classement M1, et également une bonne tenue aux intempéries vérifiant la norme ISO 105, et enfin une bonne thermosoudabilité.

Dans la description et revendications, les termes et expressions indiqués ci-après ont les significations suivantes :
- une "résine acrylique" est tout polymère synthétique dérivé de l'acide propénoïque ;
- "un composé acide fort thermodégradable" est un composé qui libère un acide fort soit seul, soit in situ à partir d'un précurseur, à température élevée, c'est à dire entre environ 100°C et environ 250°C ;
- "un composé polyhydrique carboné" est un composé généralement choisi dans les différentes classes de carbohydrates, et qui présente une quantité relativement élevée de carbone et beaucoup de sites hydroxyles ;
- "un dérivé phosphoré liquide" est un produit ignifugeant comprenant des groupements phosphates et qui se présente sous forme liquide ;
- "un agent générateur de gaz" est un produit qui sous l'action de la température va dégager par dégradation thermique un gaz, par exemple du dioxyde de carbone ou de l'ammoniac ;
- "un plastisol à l'état gélifié" est une dispersion de polymères, de charges et additifs divers dans un plastifiant.

Dans un autre mode de réalisation préféré selon l'invention, la composition plastique ignifugeante comprend également un plastifiant de type phosphate. Avec un plastifiant de type phosphate/phtalate, les performances sont meilleures en termes de basse viscosité, et l'exsudation de plastifiant après gélification est plus faible.

Comme exemple de plastifiant de type phtalate, on peut citer les plastifiants PALATINOL C ou PALATINOL N commercialisés par la Société BASF.

Comme plastifiant de type phosphate, on peut citer les DISFLAMOLL DPO et DPK® commercialisés par la Société BAYER.

Comme exemple de plastifiant de type phosphate/phtalate, on peut citer ceux commercialisés par la Société SOLUTIA.

Dans encore un autre mode de réalisation préféré selon l'invention, la résine acrylique est un homopolymère ou copolymère à base de méthacrylate de méthyle.

Une telle résine peut par exemple être choisie parmi les résines BM 310® et BM 410® commercialisées par la Société RÖHM.

La composition plastique ignifugeante selon l'invention peut également comprendre des agents anti-UV, et/ou des agents opacifiants, et/ou des pigments, et/ou des agents permettant d'abaisser la viscosité lors de la mise en oeuvre.

Comme agents anti-UV, on peut notamment citer des composés du type benzophénone comme le TINUVIN P commercialisé par la Société WITCO, ou des composés type benzotriazole comme le TINUVIN 320 commercialisé par la Société WITCO ou le LOWILITE 55 commercialisé par la Société GREAT LAKES.

Comme agents opacifiants, on peut notamment citer les carbonates de calcium ou les sulfures de zinc.

Comme pigments, on peut notamment citer les produits des gammes IRGALITHE ou CHROMOPHTAL commercialisés par la Société CIBA.

Comme agents permettant d'abaisser la viscosité lors de la mise en oeuvre, on peut notamment citer les réducteurs de viscosité commercialisés par la Société BYK CHEMIE.

L'agent intumescent de la composition selon l'invention comprend donc au moins un composé acide fort.

De préférence, le composé acide fort thermodégradable est choisi parmi le groupe consistant en les acides phosphoriques, les acides boriques, et les sels de ces derniers présentant un cation volatil, et de préférence le polyphosphate d'ammonium. En effet, l'agent source d'acide est choisi pour pouvoir déshydrater de manière efficace, si il est présent, l'agent source de carbone, ceci à partir d'une certaine température ou en présence d'une flamme, et pour libérer l'acide dans des domaines de température proches de la température d'inflammation du substrat à ignifuger.

L'agent intumescent peut également comprendre un composé polyhydrique carboné. Le composé polyhydrique carboné est de préférence un amidon ou alcool polyhydrique, et plus préférentiellement le pentaérythritol, En effet, ces agents contiennent une quantité relativement élevée de carbone et beaucoup de sites hydroxyles, ce qui favorise la formation d'un résidu expansé important.

L'agent intumescent peut également comprendre des dérivés phosphorés liquides qui permettent de diminuer encore la viscosité du plastisol fluide. Ces dérivés sont préférentiellement choisis parmi les produits de la gamme FYROL^{®} commercialisés par la Société AKZO.

L'agent intumescent peut également comprendre des agents générateur de gaz, tels que notamment la mélamine.

Dans un mode de réalisation très préféré selon l'invention, la composition plastique ignifugeante comprend en poids :
- résine acrylique 100.00 parties
- plastifiants phosphate/phtalate 125.00 parties
- dérivés phosphorés liquides 5.00 parties
- polyphosphate d'ammonium et mélamine 97.50 parties
- 50/50 pentaérythritol/mélamine 52.00 parties

Un autre objet selon l'invention est un fil composite ignifuge, obtenu pour le procédé ci dessus decrit et comprenant une âme faiblement combustible en matériau minéral ou organique, par exemple sans halogène, et une gaine en matière plastique susceptible d'être obtenue à partir de la composition ignifugeante telle que définie précédemment. Le matériau de l'âme est par exemple de la silionne.

L'âme en matériau sans halogène du fil composite peut être choisie parmi le groupe constitué d'un fil en matière minérale ou organique, d'origine naturelle ou synthétique, telle qu'en verre, silionne, polyester, polyamide, polypropylène, polyéthylène. De préférence, on choisira une âme en fil de verre ou fibre de verre continue, ou silionne.

Un autre objet selon l'invention concerne une structure textile, assemblant ou enchevêtrant des fils composites tels qu'obtenus précédemment.

Un autre objet selon l'invention est un substrat faiblement combustible, par exemple une structure textile, enduit avec une couche de résine, obtenue par enduction puis gélification d'une composition ignifugeante selon le procédé ci-dessus défini

D'autres objets selon l'invention sont respectivement un écran de protection solaire, un écran signalétique, et un revêtement mural ou pour plafond, comprenant une structure textile telle que définie précédemment.

Les exemples qui suivent illustrent l'invention mais ne limitent en rien la portée des revendications jointes.

### EXEMPLE 1 : Formulation 1 d'une composition plastique ignifugeante :

- Plastisol
   - Résine acrylique (BM 310 de la Société RÖHM) 100,00 parties
   - Plastifiant phosphate/phtalate 125.00 parties
- Agent intumescent :
   - Polyphosphate d'ammonium 120,00 parties
   - Pentaérythritol 31.00 parties
   - Mélamine 31.00 parties
- Lubrifiant :
   - Huile de silicone 2.50 parties

Une telle composition plastique ignifugeante présente dans son domaine newtonien une viscosité de 4600 mPa.s., mesurée avec un viscosimètre Brookfield RVT à 20 tours/min. Elle est par ailleurs pseudo-plastique, à fort taux de cisaillement.

Les tests de comportement au feu ont été réalisés sur des tissus de verre enduits par la composition plastique ignifugeante décrite ci-dessus, ainsi que sur des fils composites formés d'environ 54 % (ou 50 %) de silionne et de 46 % (ou 50 %) de composition plastique ignifugeante décrite ci-dessus.

Les résultats des tests effectués permettent de montrer que le classement M1 de la norme NFP 92503 peut être attribué aux textiles ainsi obtenus.

### EXEMPLE 2 : Formulation II d'une composition plastique ignifugeante :

- Plastisol:
   - Résine acrylique (BM 310) de la Société RÖHM 100.00 parties
   - Plastifiant phosphate/phtalate 125.00 parties
- Agent intumescent :
   - Polyphosphate d'ammonium 38.00 parties
   - Pentaérythritol 31.00 parties
   - Système ignifugeant BUDIT 3077B
      (commercialisé par la Société BUDENHEIM) 150.00 parties
- Lubrifiant :
   - Huile de silicone 2.50 parties
Une telle composition plastique ignifugeante présente dans son domaine newtonien une viscosité de 6000 mPa.s., mesurée avec un viscosimètre Brookfield RVT à 20 tours/min. Elle est par ailleurs pseudo-plastique, à fort taux de cisaillement.

Les mêmes tests et résultats que ceux décrits dans l'Exemple 1 ont été reproduits.

### EXEMPLE 3 : Formulation III d'une composition plastique ignifugeante :

- Plastisol :
   - Résine acrylique (BM 310) de la Société RÖHM 80.00 parties
   - Résine acrylique (VP 8744) de la Société RÖHM 20.00 parties
   - Plastifiant phosphate/phtalate 130.00 parties
- Système intumescent :
   - Polyphosphate d'ammonium 115.00 parties
   - Pentaérythritol 31.00 parties
   - Mélamine 31.00 parties
   - Dérivé phosphoré liquide 5.00 parties
- Lubrifiant :
   - Huile de silicone 2.50 parties
   - Agent mouillant 5.00 parties
Une telle composition plastique ignifugeante présente dans son domaine newtonien une viscosité de 4300 mPa.s., mesurée avec un viscosimètre Brookfield RVT à 20 tours/min. Elle est par ailleurs pseudo-plastique, à fort taux de cisaillement.

Les mêmes tests et résultats que ceux décrits dans l'Exemple 1 ont été reproduits.

### EXEMPLE 4 : Formulation IV d'une composition plastique ignifugeante :

- Plastisol :
   - Résine acrylique (BM 310) de la Société RÖHM 80.00 parties
   - Résine acrylique (VP 8744) de la Société RÖHM 20.00 parties
   - Plastifiant phosphate 130.00 parties
- Système intumescent :
   - Polyphosphate d'ammonium 115.00 parties
   - Pentaérythritol 31.00 parties
   - Mélamine 31.00 parties
- Lubrifiant :
   - Huile de silicone 2.50 parties
Une telle composition plastique ignifugeante présente dans son domaine newtonien une viscosité de 5250 mPa.s., mesurée avec un viscosimètre Brookfield RVT à 20 tours/min. Elle est par ailleurs pseudo-plastique, à fort taux de cisaillement.

Les mêmes tests et résultats que ceux décrits dans l'Exemple 1 ont été reproduits.

Bien d'autres compositions plastiques ignifugeantes peuvent être formulées et qualifiées par des essais de routine, à partir des exemples ci-dessus, et des considérations complémentaires suivantes :
1) le comportement rhéologique final dépend pour une large part du plastifiant utilisé, plus précisément sa nature chimique et sa proportion ; à cet égard, un plastifiant comprenant un phtalate doit être préféré ;
2) la proportion des composants ou composés dans l'agent intumescent intervient peu dans le comportement rhéologique final, dès lors qu'en particulier des propriétés intumescentes effectives sont recherchées ; par contre, la proportion de l'agent intumescent est importante vis-à-vis du comportement rhéologique final. II faut limiter cette proportion, sans pour autant nuire à l'ignifugation ;
3) tout adjuvant réducteur de viscosité permet d'ajuster si nécessaire ces propriétés rhéologiques.

## Revendications

1. Procédé d'obtention d'un fil comprenant une âme et ure gaine plastique comprenant une composition ignifugeante sans halogène, constituée par au moins une résine acrylique et un agent intumescent dispersés dans un milieu plastifiant, procédé **caractérisé en ce que** :
(a) on dispose d'une filière adaptée au passage de l'âme dud t fil, générant un taux de cisaillement au moins égal à 20 000 s⁻¹ au passage du plastisol selon (c),
(b) on dispose de la composition ignifugeante à l'état de plastisol non gélifié,
(c) en utilisant un milieu plastifiant comportant, un phosphate organique majoritaire en poids dans ledit milieu plastifiant, et un phtalate, on adapte les propriétés rhéologiques du plastisol, en sorte qu'à bas taux de cisaillement, au plus égal à 400 S⁻¹, ledit plastisol ait un comportement de type newtonien, avec une viscosité inférieure ou égale à 6 000 mPa.s, mesurée avec un viscosimètre Brookfield RVT à 20 tours/mn, et qu'à fort taux de cisaillement au moins égal à 10 000_s⁻¹ , il ait un comportement de type pseudo-plastique,
(d) on fait passer l'âme du fil dans ladite filière, avec une distribution périphérique du plastisol autour de ladite âme du plastisol,
(e) on procède à la gélification de la composition ignifugeante.

2. Procédé selon la revendication 1, **caractérisé en ce que** la proportion pondérale du milieu plastifiant dans le plastisol est au plus égale à 200 % par rapport au poids de la résine acrylique.

3. Procédé selon la revendication 1, **caractérisé en ce que** la proportion pondérale de l'agent intumescent dans le plastisol est au plus égale à 200 % par rapport au poids de la résine acrylique.

4. Procédé selon la revendication 1, **caractérisé en ce que** la proportion pondérale du milieu plastifiant dans le plastisol est comprise entre 100 et 200 %, et de préférence comprise entre 120 et 145% er poids de la résine.

5. Procédé selon la revendication 3, **caractérisé en ce que** la proportion pondérale de l'agent intumescent dans le plastisol, est comprise entre 50 et 200 %, et de préférence comprise entre 150 et 200% en poids de la résine acrylique.

6. Fil composite ignifuge, avec une gaine en résine faiblement combustible, par exemple sans halogène, **caractérisé en ce qu'**il est susceptible d'être obtenu par le procédé selon l'une quelconque des revendications 1 à 5.

7. Fil selon la revendication 6, **caractérisé en ce que** e matériau de l'âme est de la silionne.

8. Structure textile, assemblant ou enchevêtrant des fils selon la revendication 7.

9. Ecran de protection solaire comportant une structure textile selon la revendication 8.

10. Ecran signalétique comprenant une structure textile selon la revendication 8.

11. Revêtement mural ou pour plafond, comprenant une structure textile selon la revendication 8.

## Claims

1. Process for the production of a yarn comprising a core and a plastic sheath comprising a halogen-free flame retardant composition containing at least an acrylic resin and an intumescent agent dispersed in a plasticizing medium, which process is **characterized in that**:
(a) a die suitable for passage of the said core, generating a shear rate of at least equal to 20,000 s⁻¹ on passage of the plastisol according to (c) is provided
(b) the flame retardant composition is provided in the state of a non-gelled plastisol,
(c) by using a plasticizing medium containing an organic phosphate as the major component by weight in the said plasticizing medium and a phthalate, the rheology properties of the plastisol are adapted such that at a low shear rate of at most equal to 400 s⁻¹ the said plastisol shows Newtonian behaviour, with a viscosity of less than or equal to 6,000 mPa.s, measured with a Brookfield RVT viscometer at 20 revolutions/min, and at a high shear rate of at least equal to 10,000 s⁻¹ it shows pseudo-plastic behaviour
(d) the core of the yarn is passed through the said die with a peripheral distribution of the plastisol around the said core of plastisol,
(e) gelling of the flame retardant composition is carried out.

2. Process according to claim 1, **characterized in that** the proportion by weight of the plasticizing medium in the plastisol is at most equal to 200 %, based on the weight of the acrylic resin.

3. Process according to claim 1, **characterized in that** the proportion by weight of the intumescent agent in the plastisol is at most equal to 200 %, based on the weight of the acrylic resin.

4. Process according to claim 1, **characterized in that** the proportion by weight of the plasticizing medium in the plastisol is between 100 and 200 %, and preferably between 120 and 145 % by weight of the resin.

5. Process according to claim 3, **characterized in that** the proportion by weight of the intumescent agent in the plastisol is between 50 and 200 %, and preferably between 150 and 200 % by weight of the acrylic resin.

6. Composite flame retardant yarn with a sheath of resin of low combustibility, for example halogen-free, **characterized in that** it can be obtained by the process according to any one of claims 1 to 5.

7. Yarn according to claim 6, **characterized in that** the core material is of silionne.

8. Textile structure assembling or entangling yarns according to claim 7.

9. Solar protection screen comprising a textile structure according to claim 8.

10. Descriptive screen comprising a textile structure according to claim 8.

11. Coating for a wall or ceiling, comprising a textile structure according to claim 8.

## Patentansprüche

1. Verfahren zum Herstellen eines Fadens, der eine Seele und eine Kunststoffumhüllung aufweist, die eine halogenfreie, nicht entflammbare Zusammensetzung aufweist, die zumindest aus einem Acrylharz und ein Schwellungsmittel gebildet ist, die in einem plastifizierenden Medium dispergiert sind, wobei das Verfahren **dadurch gekennzeichnet ist, daß**:
(a) ein Fadenführer vorgesehen wird, der für den Durchgang der Seele des Fadens ausgelegt ist und einen Schubwert von mindestens gleich 20000 s⁻¹ für den Durchgang von Plastisol gemäß (c) erzeugt,
(b) die nicht entflammbare Zusammensetzung in den Zustand von nicht geliertem Plastisol gebracht wird,
(c) unter Verwendung eines plastifizierenden Mediums, das ein organisches Phosphat, das in dem plastifizierenden Medium dem Gewicht nach überwiegend vorhanden ist, und ein Phthalat enthält, die rheologischen Eigenschaften von Plastisol angepaßt werden, derart, daß bei einem niedrigem Schubwert von höchstens 400 s⁻¹ das Plastisol ein Verhalten vom Newtonschen Typ mit einer Viskosität von kleiner oder gleich 6000 mPa·s, gemessen mit einem Brookfield-RVT-Viskosimeter bei 20 U/min, zeigt, und daß es bei hohem Schubwert von mindestens gleich 10000 s⁻¹ ein Verhalten vom pseudoplastischen Typ zeigt,
(d) die Seele des Fadens in den Fadenführer mit einer Umfangsverteilung aus Plastisol um die Seele von dem Plastisol bewegt wird,
(e) die Gelierung der nicht entflammbaren Zusammensetzung vorgenommen wird.

2. Verfahren nach Anspruch 1,
**dadurch gekennzeichnet,**
**daß** der Gewichtsanteil des plastifizierenden Mediums im Plastisol höchstens gleich 200 % in Bezug auf das Gewicht des Acrylharzes beträgt.

3. Verfahren nach Anspruch 1,
**dadurch gekennzeichnet,**
**daß** der Gewichtsanteil des Schwellungsmittels im Plastisol höchstens gleich 200 % in Bezug auf das Gewicht des Acrylharzes beträgt.

4. Verfahren nach Anspruch 1,
**dadurch gekennzeichnet,**
**daß** der Gewichtsanteil des plastifizierenden Mediums im Plastisol im Bereich von 100 bis 200 % und vorzugsweise im Bereich von 120 bis 145 % in Bezug auf das Gewicht des Harzes liegt.

5. Verfahren nach Anspruch 3,
**dadurch gekennzeichnet,**
**daß** der Gewichtsanteil des Schwellungsmittels im Plastisol im Bereich von 50 bis 200 % und vorzugsweise im Bereich von 150 bis 200 % in Bezug auf das Gewicht des Acrylharzes liegt.

6. Nicht entflammbarer Verbundfaden, der eine Umhüllung aus schwer brennbarem Harz besitzt, das beispielsweise halogenfrei ist,
**dadurch gekennzeichnet,**
**daß** er mit dem Verfahren nach einem der Ansprüche 1 bis 5 erhalten werden kann.

7. Faden nach Anspruch 6,
**dadurch gekennzeichnet,**
**daß** das Material der Seele ein Glasfasererzeugnis ist.

8. Textilstruktur,
in der Fäden gemäß Anspruch 7 zusammengefügt oder gewirkt sind.

9. Sonnenschutzschirm,
der eine Textilstruktur gemäß Anspruch 8 enthält.

10. Erkennungsschirm,
der eine Textilstruktur gemäß Anspruch 8 enthält.

11. Wandbeschichtung oder Deckenbeschichtung,
die eine Textilstruktur gemäß Anspruch 8 enthält.
